# EUROPEAN PATENT APPLICATION

(11) **EP 4 582 478 A1**
(43) Date of publication of application: **09.07.2025**
(21) Application number: 22957231.8
(22) Date of filing: 16.12.2022
(51) Int. Cl.: C08L 23/08, C08L 23/06, C08K 3/04, C08K 5/14

(54) **SEMI-CONDUCTIVE SHIELDING MATERIAL BASED ON COMPOUND RESIN, PREPARATION METHOD THEREFOR AND USE THEREOF**

(30) Priority: 30.08.2022 CN 202211057079
(71) Applicant: Electric Power Research Institute. China Southern Power Grid, Guangzhou, Guangdong 510663 (CN)
(72) Inventor: HOU, Shuai, Guangzhou, Guangdong 510663 (CN); FU, Mingli, Guangzhou, Guangdong 510663 (CN); LI, Xiaolin, Guangzhou, Guangdong 510663 (CN); JIA, Lei, Guangzhou, Guangdong 510663 (CN); ZHAN, Yunpeng, Guangzhou, Guangdong 510663 (CN); HUI, Baojun, Guangzhou, Guangdong 510663 (CN); ZHU, Wenbo, Guangzhou, Guangdong 510663 (CN); FENG, Bin, Guangzhou, Guangdong 510663 (CN); ZHANG, Yifan, Guangzhou, Guangdong 510663 (CN)
(74) Representative: Hoffmann Eitle
(86) International application number: PCT/CN2022/139563
(87) International publication number: WO 2024/045419

(57) **Abstract**

The present application relates to a composite resin-based semi-conductive shielding material, prepared from raw materials including following components: 55 to 65 parts by mass of a composite resin, 20 to 30 parts by mass of electrically conductive fillers, and 0.9 to 2 parts by mass of a cross-linking agent, wherein the composite resin is a composite of a low-density polyethylene resin and an ethylene-acrylic acid resin, and the ethylene-acrylic acid resin is at least one of an ethylene-ethyl acrylate resin or an ethylene-butyl acrylate resin.

## Description

### CROSS-REFERENCE TO RELATED APPLICATIONS

This application claims priority to Chinese patent application No. 202211057079.2, titled "COMPOSITE RESIN-BASED SEMI-CONDUCTIVE SHIELDING MATERIAL, PREPARATION METHOD AND USE THEREOF", filed on August 30, 2022. The contents of the above identified applications are hereby incorporated herein in their entireties by reference.

### TECHNICAL FIELD

The present application relates to the field of high-voltage cable technology, and particularly relates to a composite resin-based semi-conductive shielding material and a preparation method and use thereof.

### BACKGROUND

With the rapid development of the electric power industry, the production and application of high-voltage power cables have entered a rapid development phase. Currently, in the medium and low voltage domains, semi-conductive shielding materials of cables can generally exhibit good comprehensive performance and be used stably. However, when the voltage increases, for instance, to the 220kV high-voltage level, the use of semi-conductive shielding materials in cables is significantly constrained. One of the important reasons for this constraint is that traditional semi-conductive shielding materials for high-voltage cables have a high positive temperature coefficient (PTC) during use. This causes wide variations in resistance when the cables operate under high-voltage conditions, thereby affecting the stable use of the high-voltage cables.

### SUMMARY

In view of this, there is a need to provide a composite resin-based semi-conductive shielding material, and a preparation method and use thereof. The composite resin-based semi-conductive shielding material possesses a relatively low PTC, which can be well-suited for being used as a semi-conductive shielding material of a high-voltage cable.

In order to address the above technical issue, an embodiment of a technical solution of the present application is as follows:

A composite resin-based semi-conductive shielding material is prepared from raw materials including the following amounts of components: 55 to 65 parts by mass of a composite resin, 20 to 30 parts by mass of electrically conductive fillers, and 0.9 to 2 parts by mass of a cross-linking agent, wherein the composite resin is a composite of a low-density polyethylene resin and an ethylene-acrylic acid resin, and the ethylene-acrylic acid resin is at least one of an ethylene-ethyl acrylate resin or an ethylene-butyl acrylate resin.

In some embodiments, the raw materials for preparation of the composite resin-based semi-conductive shielding material include the following amounts of components: 61 to 64 parts by mass of the composite resin, 25 to 30 parts by mass of the electrically conducting fillers, and 1 to 1.5 parts by mass of the cross-linking agent.

In some embodiments, the mass ratio of the low-density polyethylene resin to the ethylene-acrylic acid resin is in a range from 1:4 to 1: 1.

In some embodiments, the melt flow index of the low-density polyethylene resin is in a range from 0.25g/10min to 2g/10min.

In some embodiments, the density of the low-density polyethylene resin is in a range from 0.918g/cm³ to 0.932g/cm³.

In some embodiments, the melt flow index of the ethylene-acrylic acid resin is less than or equal to 10g/min.

In some embodiments, the elongation at break of the ethylene-acrylic acid resin is greater than or equal to 700%.

In some embodiments, the raw materials for preparation of the composite resin-based semi-conductive shielding material further include a dispersant, and the amount of the dispersant is 0.5 to 2 parts by mass.

In some embodiments, the raw materials for preparation of the composite resin-based semi-conductive shielding material further include an auxiliary agent, and the amount of the auxiliary agent is 2 to 6 parts by mass.

In some embodiments, the auxiliary agent includes the following components: 1 to 2 parts by mass of a coupling agent, 1 to 3 parts by mass of a lubricant, and 0.6 to 1 part by mass of an antioxidant.

A method for preparing the above-described composite resin-based semi-conductive shielding material includes the following steps:
mixing and kneading, and granulating the low-density polyethylene resin, the ethylene-acrylic acid resin, and the electrically conductive fillers to obtain a granulated material;
mixing the granulated material with the cross-linking agent to obtain a preform; and
heating the preform.

In some embodiments, the mixing and kneading the low-density polyethylene resin, the ethylene-acrylic acid resin, and the electrically conductive fillers include the following steps: mixing and kneading the low-density polyethylene resin with the ethylene-acrylic acid resin, adding the electrically conductive fillers and continuing with the mixing and kneading.

In some embodiments, the mixing and kneading is performed at a rotation speed in a range from 80rpm to 150rpm and a temperature in a range from 150°C to 180°C.

In some embodiments, the temperature of the heating is in a range from 50°C to 70°C.

A semi-conductive shielding product is prepared from raw materials including the above-described semi-conductive shielding material or a semi-conductive shielding material prepared by the above-described method.

The composite resin-based semi-conductive shielding material is primarily prepared from 55 to 65 parts by mass of a composite resin, 20 to 30 parts by mass of electrically conductive fillers, and 0.9 to 2 parts by mass of a cross-linking agent. When the shielding material is used as a semi-conductive shielding material of a high-voltage cable, the melting expansion of the ethylene-acrylic acid resin with the increase of temperature during the use of the cable is suppressed by the low-density polyethylene resin. This can effectively stabilize the electrically conductive network as the temperature rises. Additionally, the electrically conductive fillers are primarily distributed within the low-density polyethylene resin. The low-density polyethylene resin expands less with the temperature rise, reducing the impact of temperature variations on the electrically conductive network. Moreover, the expansion of the ethylene-acrylic acid resin further compresses the low-density polyethylene, promoting contact between the electrically conductive fillers, thereby enhancing the electrically conductive network, so as to reduce the PTC of the shielding material, suppress the PTC effect, and diminish the adverse impact of the PTC effect on application of the high-voltage cable.

Furthermore, in the composite resin-based semi-conductive shielding material, there is a double percolation effect between the low-density polyethylene resin and the ethylene-acrylic acid resin, and the electrically conductive fillers are primarily distributed within the low-density polyethylene resin. When the low-density polyethylene resin forms a continuous phase, a shielding material with a relatively high conductivity can be obtained while the amount of the electrically conductive fillers used can be reduced.

Additionally, in preparation of a high-voltage cable, the composite resin-based semi-conductive shielding material exhibits good interface compatibility with the insulating layer of the high-voltage cable, which can enhance the bonding strength between the semi-conductive shielding material and the insulating layer of the high-voltage cable. This prevents the shielding material from being easily peeled off, thereby increasing the lifespan of the high-voltage cable.

### BRIEF DESCRIPTION OF THE DRAWINGS

In order to illustrate the embodiments of the present application or the technical solution in the prior art more clearly, the drawing to be referred in description of the embodiments or the prior art will be described briefly. Apparently, the following described drawing is merely for some embodiments of the present application, and other drawings can be derived by those of ordinary skill in the art without any creative effort.

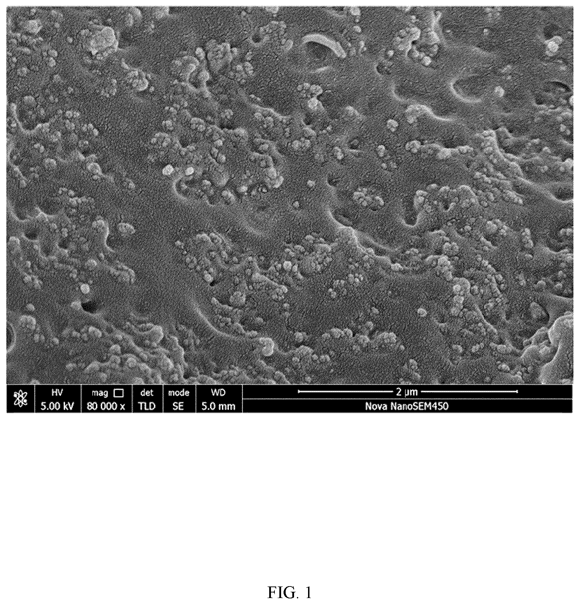

FIG. 1 shows a scanning electron microscopic image of a shielding material in Example 2 of the present application.

### DETAILED DESCRIPTION

To make the objectives, features, and advantages of the present application more understandable, detailed explanations of specific embodiments are provided below, along with accompanying drawings. Many specific details are disclosed in the following description to facilitate a comprehensive understanding of the present application. However, the present application can be implemented in various ways different from those described herein, and those skilled in the art may make similar improvements without departing from the spirit of the present application. Therefore, the present application is not limited to the specific embodiments disclosed below.

Unless otherwise defined, all technical and scientific terms used herein have the same meaning as those normally understood by those of ordinary skill in the art. The terms used herein in the specification of the present application are for the purpose of describing specific embodiments only and are not intended to limit the present application. The term "and/or" as used herein includes any and all combinations of one or more relevant listed items.

An embodiment of the present application provides a composite resin-based semi-conductive shielding material. The raw materials for preparing the semi-conductive shielding material include the following amounts of components: 55 to 65 parts by mass of a composite resin, 20 to 30 parts by mass of electrically conductive fillers, and 0.9 to 2 parts by mass of a cross-linking agent, wherein the composite resin is a composite of a low-density polyethylene resin and an ethylene-acrylic acid resin, and the ethylene-acrylic acid resin is at least one of an ethylene-ethyl acrylate resin or an ethylene-butyl acrylate resin.

It can be understood that during use of cables, the resin matrix will undergo thermal expansion, thereby disrupting the electrically conductive network within the semi-conductive shielding material. This disruption leads to a sharp increase in the volume resistivity of the semi-conductive shielding material at 90°C, an increase in the PTC, and a notable enhancement in the PTC effect. When the semi-conductive shielding material of the present embodiment is used as the semi-conductive shielding material of a high-voltage cable, the melting expansion of the ethylene-acrylic acid resin with the increase of temperature during the use of the cable is suppressed by the low-density polyethylene resin. This can effectively stabilize the electrically conductive network as the temperature rises. Additionally, the electrically conductive fillers are primarily distributed within the low-density polyethylene resin. The low-density polyethylene resin expands less with the temperature rise, reducing the impact of temperature variations on the electrically conductive network. Moreover, the expansion of the ethylene-acrylic acid resin further compresses the low-density polyethylene, promoting contact between the electrically conductive fillers, thereby enhancing the electrically conductive network, so as to reduce the PTC of the shielding material, suppress the PTC effect, and diminish the adverse impact of the PTC effect on application of the high-voltage cable.

Furthermore, in the composite resin-based semi-conductive shielding material, there is a double percolation effect between the low-density polyethylene resin and the ethylene-acrylic acid resin, and the electrically conductive fillers are primarily distributed within the low-density polyethylene resin. When the low-density polyethylene resin forms a continuous phase, a shielding material with a relatively high conductivity can be obtained while the amount of electrically conductive fillers used can be reduced.

Additionally, in preparation of a high-voltage cable, the composite resin-based semi-conductive shielding material exhibits good interface compatibility with the insulating layer of the high-voltage cable, which can enhance the bonding strength between the semi-conductive shielding material and the insulating layer of the high-voltage cable. This prevents the semi-conductive shielding material from being easily peeled off, thereby increasing the lifespan of the high-voltage cable.

In a specific embodiment, the melting point of the low-density polyethylene resin is higher than that of the ethylene-acrylic acid resin. In this case, the melting expansion of the ethylene-acrylic acid resin can be better suppressed by the low-density polyethylene resin, further stabilizing the electrically conductive network.

In a specific embodiment, the raw materials for preparation of the composite resin-based semi-conductive shielding material include the following amounts of components: 61 to 64 parts by mass of the composite resin, 25 to 30 parts by mass of the electrically conducting fillers, and 1 to 1.5 parts by mass of the cross-linking agent.

In a specific embodiment, the mass ratio of the low-density polyethylene resin to the ethylene-acrylic acid resin is in a range from 1:4 to 1:1. For example, the mass ratio of the low-density polyethylene resin to the ethylene-acrylic acid resin is 1:4, 3:7, 2:3, 1:1, etc. It can be understood that the mass ratio of the low-density polyethylene resin to the ethylene-acrylic acid resin can be otherwise selected within the range of 1:4 to 1:1.

Furthermore, the melt flow index of the low-density polyethylene resin is in a range from 0.25g/10min to 2g/10min. For example, the melt flow index of the low-density polyethylene resin is 0.5g/10min, 0.6g/10min, 0.8g/10min, 1g/10min, 1.5g/10min, 1.8g/10min, 2g/10min, etc. It can be understood that the melt flow index of the low-density polyethylene resin can be otherwise selected within the range of 0.25g/10min to 2g/10min.

Optionally, the density of the low-density polyethylene resin is in a range from 0.918g/cm³ to 0.932g/cm³. For example, the density of the low-density polyethylene resin is 0.918g/cm³, 0.92g/cm³, 0.925g/cm³, 0.928g/cm³, 0.93g/cm³, etc. It can be understood that the density of the low-density polyethylene resin can be otherwise selected within the range of 0.918g/cm³ to 0.932g/cm³.

In a specific embodiment, the melt flow index of the ethylene-acrylic acid resin is less than or equal to 10g/min. Optionally, the melt flow index of the ethylene-acrylic acid resin at 190°C and under a load of 2.16kg is less than or equal to 10g/min. For example, the melt flow index of the ethylene-acrylic acid resin at 190°C and under a load of 2.16kg is less than or equal to 9g/min, or less than or equal to 8g/min, or less than or equal to 5g/min, etc. Furthermore, the elongation at break of the ethylene-acrylic acid resin is greater than or equal to 700%. Optionally, the elongation at break of the ethylene-acrylic acid resin is greater than or equal to 800%, or greater than or equal to 900%, etc.

As optional embodiments of the amount of the composite resin, the amount of the composite resin can be, but is not limited to, 55 parts by mass, 56 parts by mass, 57 parts by mass, 58 parts by mass, 59 parts by mass, 60 parts by mass, 61 parts by mass, 62 parts by mass, 63 parts by mass, 64 parts by mass, or 65 parts by mass. Optionally, the amount of the composite resin can be otherwise selected within the range of 55 to 65 parts by mass.

As optional embodiments of the amount of the electrically conductive fillers, the amount of the electrically conductive fillers can be, but is not limited to, 20 parts by mass, 21 parts by mass, 22 parts by mass, 23 parts by mass, 24 parts by mass, 25 parts by mass, 26 parts by mass, 27 parts by mass, 28 parts by mass, 29 parts by mass, or 30 parts by mass. It can be understood that the amount of the electrically conductive fillers can be otherwise selected within the range of 20 to 30 parts by mass. Optionally, the electrically conductive fillers are conductive carbon black. Further optionally, the oil absorption value of the conductive carbon black is 130ml/100g to 200ml/100g. For example, the oil absorption of the conductive carbon black is 140ml/100g, 150ml/100g, 180ml/100g, etc.

As optional embodiments of the amount of the cross-linking agent, the amount of the cross-linking agent can be, but is not limited to, 0.9 part by mass, 1 part by mass, 1.1 parts by mass, 1.2 parts by mass, 1.3 parts by mass, 1.4 parts by mass, 1.5 parts by mass, 1.6 parts by mass, 1.7 parts by mass, 1.8 parts by mass, 1.9 parts by mass, or 2 parts by mass. It can be understood that the amount of the cross-linking agent can be otherwise selected within the range of 0.9 to 2 parts by mass. Optionally, the cross-linking agent is at least one of bis(tert-butyldioxyisopropyl)benzene or dicumyl peroxide.

In a specific embodiment, the raw materials for the preparation of the composite resin-based semi-conductive shielding material consist of the following amounts of components: 55 to 65 parts by mass of a composite resin, 20 to 30 parts by mass of electrically conductive fillers, and 0.9 to 2 parts by mass parts of a cross-linking agent, wherein the composite resin is a composite of a low-density polyethylene resin and an ethylene-acrylic acid resin, and the ethylene-acrylic acid resin is at least one of an ethylene-ethyl acrylate resin or an ethylene-butyl acrylate resin.

In another specific embodiment, the raw materials for the preparation of the composite resin-based semi-conductive shielding material further include a dispersant, and the amount of the dispersant is 0.5 to 2 parts by mass. Optionally, the amount of the dispersant can be, but is not limited to, 0.5 parts by mass, 0.8 parts by mass, 1 part by mass, 1.1 parts by mass, 1.2 parts by mass, 1.4 parts by mass, 1.5 parts by mass, 1.7 parts by mass, 1.9 parts by mass, or 2 parts by mass. It can be understood that the mass parts of the dispersant can be otherwise selected within the range of 0.5 to 2 parts by mass. Further optionally, the dispersant is at least one of ethylene bis-stearamide or oleamide.

In another specific embodiment, the raw materials for the preparation of the composite resin-based semi-conductive shielding material further include an auxiliary agent, and the amount of the auxiliary agent is 2 to 6 parts by mass. Optionally, the amount of the auxiliary agent can be, but is not limited to, 2 parts by mass, 2.5 parts by mass, 3 parts by mass, 3.2 parts by mass, 3.5 parts by mass, 3.8 parts by mass, 4 parts by mass, 4.2 parts by mass, 4.5 parts by mass, 4.8 parts by mass, 5 parts by mass, 5.2 parts by mass, 5.5 parts by mass, 5.8 parts by mass, or 6 parts by mass. It can be understood that the amount of the auxiliary agent can be otherwise selected within the range of 2 to 6 parts by mass.

Specifically, the auxiliary agent includes the following amounts of components: 1 to 2 parts by mass of a coupling agent, 1 to 3 parts by mass of a lubricant, and 0.6 to 1 part by mass of an antioxidant. Optionally, the coupling agent is a silane coupling agent. The lubricant can be zinc stearate. The antioxidant can be at least one of antioxidant 1010 or antioxidant 168. Further optionally, the silane coupling agent is KH550. The antioxidant can be a mixture of antioxidant 1010 and antioxidant 168 at a mass ratio of 1.5:1 to 2.5:1. Furthermore, the mass ratio of antioxidant 1010 to antioxidant 168 can be, but is not limited to, 1.8:1, 2:1, 2.2:1, 2.5:1. Optionally, the auxiliary agent is a mixture of the coupling agent, the lubricant, and the antioxidant.

It can be understood that, in the auxiliary agent, the amount of the coupling agent can be, but is not limited to, 1 part by mass, 1.2 parts by mass, 1.5 parts by mass, 1.8 parts by mass, 2 parts by mass, etc. The amount of the lubricant can be, but is not limited to, 1 part by mass, 1.2 parts by mass, 1.5 parts by mass, 1.8 parts by mass, 2 parts by mass, 2.2 parts by mass, 2.5 parts by mass, 2.8 parts by mass, 3 parts by mass, etc. The amount of the antioxidant can be, but is not limited to, 0.6 parts by mass, 0.7 parts by mass, 0.8 parts by mass, 0.9 parts by mass, 1 part by mass, etc. It can also be understood that the amount of the coupling agent can be otherwise selected within the range of 1 to 2 parts by mass, the amount of the lubricant can be otherwise selected within the range of 1 to 3 parts by mass, and the amount of the antioxidant can be otherwise selected within the range of 0.6 to 1 part by mass.

In a specific embodiment, the raw materials for the preparation of the composite resin-based semi-conductive shielding material consist of the following amounts of components: 55 to 65 parts by mass of a composite resin, 20 to 30 parts by mass of electrically conductive fillers, 0.9 to 2 parts by mass of a cross-linking agent, and 0.5 to 2 parts by mass of a dispersant, wherein the composite resin is a composite of a low-density polyethylene resin and an ethylene-acrylic acid resin, and the ethylene-acrylic acid resin is at least one of an ethylene-ethyl acrylate resin or an ethylene-butyl acrylate resin.

In a specific embodiment, the raw materials for the preparation of the composite resin-based semi-conductive shielding material consist of the following amounts of components: 55 to 65 parts by mass of a composite resin, 20 to 30 parts by mass of electrically conductive fillers, 0.9 to 2 parts by mass of a cross-linking agent, 0.5 to 2 parts by mass of a dispersant, and 2 to 6 parts by mass of an auxiliary agent, wherein the composite resin is a composite of a low-density polyethylene resin and an ethylene-acrylic acid resin, and the ethylene-acrylic acid resin is at least one of an ethylene-ethyl acrylate resin or an ethylene-butyl acrylate resin.

Another embodiment of the present application provides a method for preparing the above-described composite resin based semi-conductive shielding material. The method includes the following steps: mixing and kneading, and granulating the low-density polyethylene resin, the ethylene-acrylic acid resin, and the electrically conductive fillers to obtain a granulated material; mixing the granulated material with the cross-linking agent to obtain a preform; and heating the preform.

In a specific embodiment, the mixing and kneading is performed at a rotation speed in a range from 80rpm to 150rpm and a temperature in a range from 150°C to 180°C. Optionally, the mixing and kneading is performed in a torque rheometer. Further optionally, the rotation speed of the mixing and kneading can be, but is not limited to, 80rpm, 90rpm, 100rpm, 110rpm, 120rpm, 130rpm, 140rpm, etc., and the temperature of the mixing and kneading can be 150°C, 160°C, 170°C, 180°C, etc. Further optionally, the time of the mixing and kneading is 10min to 20min, for example, 10min, 12min, 15min, 18min, 20min, etc.

In a specific embodiment, the mixing and kneading the low-density polyethylene resin, the ethylene-acrylic acid resin, and the electrically conductive fillers include the following steps: mixing and kneading the low-density polyethylene resin with the ethylene-acrylic acid resin, adding the electrically conductive fillers and continuing with the mixing and kneading. Further, the mixing and kneading of the low-density polyethylene resin and the ethylene-acrylic acid resin is performed for 4min to 6min, then the electrically conductive fillers are added, and the mixing and kneading continues for 8min to 12min. Furthermore, the mixing and kneading of the low-density polyethylene resin and the ethylene-acrylic acid resin is performed for 5min, then the electrically conductive fillers are added, and the mixing and kneading continues for 10min. It can be understood that the conditions for the mixing and kneading of the low-density polyethylene resin and the ethylene-acrylic acid resin, and the continuing with the mixing and kneading after adding the electrically conductive fillers, can be independently selected from a rotation speed in a range from 80rpm to 150rpm and a temperature in a range from 150°C to 180°C. Optionally, the conditions for the mixing and kneading of the low-density polyethylene resin and the ethylene-acrylic acid resin, and the continuing with the mixing and kneading after adding the electrically conductive fillers, can be the same.

In a specific embodiment, the heating is at a temperature in a range from 50°C to 70°C. Optionally, the temperature of the heating can be 50°C, 55°C, 60°C, 65°C, 70°C, etc. Furthermore, the time of the heating is in a range from 5h to 10h. Optionally, the time of the heating can be 5h, 6h, 7h, 8h, 9h, 10h, etc. Through the heating, the cross-linking agent can be fully absorbed by the granulated material, thereby improving the performance of the semi-conductive shielding material.

Before mixing and kneading the granulated material with the cross-linking agent, the method further includes the following step: maintaining the temperature of the granulated material at 50°C to 70°C for a period of time. Optionally, the granulated material is maintained at a temperature of 50°C, 55°C, 60°C, 65°C, 70°C, etc. Furthermore, the granulated material is maintained at the temperature for 3h to 6h, e.g., 3h, 4h, 5h, 6h, etc.

Before mixing the granulated material with the cross-linking agent, the method further includes grinding the cross-linking agent. The grinding time ranges from 8min to 20min. Specifically, the grinding time can be 8min, 10min, 15min, 20min, etc. It can be understood that the grinding can be performed in a grinding machine.

It can be understood that in the preparation of the composite resin-based semi-conductive shielding material, before mixing and kneading the low-density polyethylene resin, the ethylene-acrylic acid resin, and the electrically conductive fillers, the method further includes the following step: drying the low-density polyethylene resin, the ethylene-acrylic acid resin, the electrically conductive fillers, and the cross-linking agent to remove moisture from the raw materials. Furthermore, the step can be drying the low-density polyethylene resin, the ethylene-acrylic acid resin, the electrically conductive fillers, the dispersant, the auxiliary agent, and the cross-linking agent to remove moisture from the raw materials.

Another embodiment of the present application provides a semi-conductive shielding product. The raw materials for preparing the semi-conductive shielding product include the above-described semi-conductive shielding material or the semi-conductive shielding material prepared by the above-described method. Optionally, the semi-conductive shielding product is made by extruding the materials including the above-described semi-conductive shielding material. Further optionally, the semi-conductive shielding product is a semi-conductive shielding sheath. Optionally, the semi-conductive shielding product is a high-voltage cable semi-conductive shielding product.

In a specific embodiment, the raw materials for the preparation of the semi-conductive shielding product further include an insulating material. The semi-conductive shielding product is made by extruding materials that include both the above-described semi-conductive shielding material and the insulating material.

Another embodiment of the present application provides a cable including a conductor, an insulating layer, and a semi-conductive shielding layer. The conductor is located at the inner side of the insulating layer, and the semi-conductive shielding layer is located on at least one surface of the insulating layer. The semi-conductive shielding layer is made of the above-described composite resin-based semi-conductive shielding material or the composite resin-based semi-conductive shielding material prepared by the above-described method.

In a specific embodiment, the semi-conductive shielding layer is located on both surfaces of the insulating layer. In this case, the cable includes, from the inner side to the outer side, a conductor, an inner shielding layer, an insulating layer, and an outer shielding layer, wherein both the inner and outer shielding layers are the semi-conductive shielding layers.

The following are specific examples.

### Example 1

The raw materials for the preparation of the composite resin-based semi-conductive shielding material in this example are: 63.5 parts by mass of a composite resin, 30 parts by mass of electrically conductive fillers, 1 part by mass of a dispersant, 4.5 parts by mass of an auxiliary agent, and 1 part by mass of a cross-linking agent. The composite resin consists of a low-density polyethylene resin and an ethylene-butyl acrylate resin with a mass ratio of 2:3. The melt flow index of the low-density polyethylene resin is 0.5g/10min, and the density of the low-density polyethylene resin is 0.918g/cm³; the melt flow index of the ethylene-butyl acrylate resin at 190°C and under a load of 2.16kg is less than or equal to 10g/min, and the elongation at break of the ethylene-butyl acrylate resin is greater than or equal to 700%. The electrically conductive fillers are conductive carbon black. The dispersant is ethylene bis-stearamide. The cross-linking agent is bis(tert-butyldioxyisopropyl)benzene (BIBP).

The auxiliary agent is a mixture of the following raw materials: 2 parts by mass of a coupling agent, 2 parts by mass of a lubricant, and 0.5 parts by mass of an antioxidant. The coupling agent is silane coupling agent KH550. The lubricant is zinc stearate. The antioxidant is a mixture of antioxidant 1010 and antioxidant 168 with a mass ratio of 2:1.

In the present example, the method for preparing the composite resin-based semi-conductive shielding material includes the following steps:
S101: drying the low-density polyethylene resin, the ethylene-butyl acrylate resin, the conductive carbon black, the dispersant, the auxiliary agent, and the cross-linking agent to remove moisture from the materials.
S102: mixing and kneading the low-density polyethylene resin, the ethylene-butyl acrylate resin, the dispersant, and the auxiliary agent for 5min, then adding the electrically conductive fillers and continuing with the mixing and kneading for 10min, followed by granulating to obtain a granulated material. The mixing and kneading is performed in a torque rheometer at a rotation speed of 100rpm and a temperature of 160°C.
S103: drying the granulated material to remove moisture, then maintaining the temperature of the granulated material at 60°C for 4h.
S104: grinding the cross-linking agent in a grinding machine for 10min.
S105: mixing the temperature-maintained granulated material with the ground cross-linking agent to obtain a preform.
S106: heating the preform at 60°C for 8h.

After the heating, the composite resin-based semi-conductive shielding material in the present example is obtained.

### Example 2

Compared to Example 1, the difference in the present example lies in step S102, where the low-density polyethylene resin is kneaded for 5min, then the electrically conductive fillers are added, and mixed and kneaded for 5min, and finally, the ethylene-butyl acrylate resin is added, mixed and kneaded for 5min before granulating to obtain the granulated material.

### Example 3

Compared to Example 1, the difference in the present example lies in step S102, where the ethylene-butyl acrylate resin is kneaded for 5min, then the electrically conductive fillers are added, and mixed and kneaded for 5min, and finally, the low-density polyethylene resin is added, and mixed and kneaded for 5min before granulating to obtain the granulated material.

### Example 4

Compared to Example 1, the difference in the present example is that the raw materials for the preparation of the composite resin-based semi-conductive shielding material are: 63.5 parts by mass of the composite resin, 30 parts by mass of the electrically conductive fillers, and 1 part by mass of the cross-linking agent.

### Example 5

Compared to Example 1, the difference in the present example is that the raw materials for the preparation of the composite resin-based semi-conductive shielding material are: 55 parts by mass of the composite resin, 20 parts by mass of the electrically conductive fillers, 1 part by mass of the dispersant, 4.5 parts by mass of the auxiliary agent, and 0.9 part by mass of the cross-linking agent.

### Example 6

Compared to Example 1, the difference in the present example is that the raw materials for the preparation of the composite resin-based semi-conductive shielding material are: 60 parts by mass of the composite resin, 25 parts by mass of the electrically conductive fillers, 1 part by mass of the dispersant, 4.5 parts by mass of the auxiliary agent, and 1.5 part by mass of the cross-linking agent.

### Example 7

Compared to Example 1, the difference in the present example is that the raw materials for the preparation of the composite resin-based semi-conductive shielding material are: 65 parts by mass of the composite resin, 30 parts by mass of the electrically conductive fillers, 1 part by mass of the dispersant, 4.5 parts by mass of the auxiliary agent, and 2 part by mass of the cross-linking agent.

### Comparative Example 1

Compared to Example 1, the difference in the present comparative example is that the composite resin is replaced with the ethylene-butyl acrylate resin.

### Comparative Example 2

Compared to Example 1, the difference in the present comparative example is that the raw materials for the preparation of the composite resin-based semi-conductive shielding material are: 50 parts by mass of the composite resin, 15 parts by mass of the electrically conductive fillers, and 0.5 part by mass of the cross-linking agent.

### Comparative Example 3

Compared to Example 1, the difference in the present comparative example is that the raw materials for the preparation of the composite resin-based semi-conductive shielding material are: 70 parts by mass of the composite resin, 35 parts by mass of the electrically conductive fillers, and 2.5 part by mass of the cross-linking agent.

### Comparative Example 4

Compared to Example 1, the difference in the present comparative example is that the raw materials for the preparation of the composite resin-based semi-conductive shielding material are: 63.5 parts by mass of the composite resin, 35 parts by mass of the electrically conductive fillers, and 0.5 part by mass of the cross-linking agent.

### Test Examples

The shielding materials obtained in the examples and comparative examples are respectively formed into test plates with a thickness of 1mm. Then, each test plate is subjected to the tests for tensile strength, elongation at break, volume resistivity at room temperature, volume resistivity at 90°C, and PTC. The test results are shown in Table 1.

**Table 1**

| Test item | tensile strength (MPa) | elongation at break (%) | resistivity at 23°C (Ω·cm) | resistivity at 90°C (Ω·cm) | PTC |
|---|---|---|---|---|---|
| Test method | GB/T1040.2 | GB/T1040.2 | GB/T3048.3 | GB/T3048.3 | |
| Comparative Example 1 | 16.6 | 271.3 | 20.1 | 1735.8 | 86.3 |
| Example 1 | 15.4 | 180.2 | 8.85 | 98.4 | 11.1 |
| Example 2 | 15.1 | 162.3 | 16.4 | 243.4 | 14.8 |
| Example 3 | 16.2 | 200.6 | 33.9 | 2412.5 | 29.1 |
| Example 4 | 12.2 | 154.7 | 15.6 | 193.2 | 12.4 |
| Example 5 | 18.2 | 220.6 | 20.9 | 361.3 | 17.3 |
| Example 6 | 16.4 | 211.3 | 17.2 | 270.5 | 15.7 |
| Example 7 | 16.1 | 191.2 | 10.5 | 117.2 | 11.2 |
| Comparative Example 2 | 17.6 | 281.6 | 65.4 | 2153.4 | 32.9 |
| Comparative Example 3 | 14.5 | 131.5 | 9.6 | 121.4 | 12.6 |
| Comparative Example 4 | 13.2 | 116.5 | 10.7 | 132.6 | 12.4 |
| Performance index | ≥12 | ≥150 | ≤100 | ≤350 | |

It can be known from Table 1 that the PTCs for Examples 1 to 3 are lower than that of Comparative Example 1, indicating that the composite resin can reduce the PTC effect, thereby reducing the impact of temperature on the shielding material. Specifically, it can be seen from Table 1 that Example 1 has superior overall performance, with resistivities at 23°C and 90°C being 8.85Ω•cm and 98.4Ω•cm, respectively, and PTC of 11.1. Compared to Comparative Example 1, the reduction in the PTC effect is significantly suppressed.

Further, the shielding material obtained in Example 2 is subjected to microscopic structural analysis, as shown in FIG. 1. It can be seen from FIG. 1 that two continuous phases have been formed within the shielding material, with the conductive carbon black primarily distributed in one of the phases. This demonstrates that double percolation structure can inhibit the PTC effect of the shielding material and enhance the electrically conductive network.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A composite resin-based semi-conductive shielding material, prepared from raw materials comprising following amounts of components:
55 to 65 parts by mass of a composite resin,
20 to 30 parts by mass of electrically conductive fillers, and
0.9 to 2 parts by mass of a cross-linking agent,
wherein the composite resin is a composite of a low-density polyethylene resin and an ethylene-acrylic acid resin, and the ethylene-acrylic acid resin is selected from the group consisting of an ethylene-ethyl acrylate resin, an ethylene-butyl acrylate resin, and a combination thereof.

2. The composite resin based semi-conductive shielding material of claim 1, wherein the raw materials comprise following amounts of components:
61 to 64 parts by mass of the composite resin,
25 to 30 parts by mass of the electrically conducting fillers, and
1 to 1.5 parts by mass of the cross-linking agent.

3. The composite resin-based semi-conductive shielding material of claim 1 or 2, wherein the mass ratio of the low-density polyethylene resin to the ethylene-acrylic acid resin is in a range from 1:4 to 1:1.

4. The composite resin-based semi-conductive shielding material of any one of claims 1 to 3, wherein the melt flow index of the low-density polyethylene resin is in a range from 0.25g/10min to 2g/10min.

5. The composite resin-based semi-conductive shielding material of any one of claims 1 to 4, wherein the density of the low-density polyethylene resin is in a range from 0.918g/cm³ to 0.932g/cm³.

6. The composite resin-based semi-conductive shielding material of any one of claims 1 to 5, wherein the melt flow index of the ethylene-acrylic acid resin is less than or equal to 10g/min.

7. The composite resin-based semi-conductive shielding material of any one of claims 1 to 6, wherein the elongation at break of the ethylene-acrylic acid resin is greater than or equal to 700%.

8. The composite resin-based semi-conductive shielding material of any one of claims 1 to 7, wherein the raw materials further comprise a dispersant, and the amount of the dispersant is 0.5 to 2 parts by mass.

9. The composite resin-based semi-conductive shielding material of any one of claims 1 to 8, wherein the raw materials further comprise an auxiliary agent, and the amount of the auxiliary agent is 2 to 6 parts by mass.

10. The composite resin-based semi-conductive shielding material of claim 9, wherein the auxiliary agent comprises following amounts of components:
1 to 2 parts by mass of a coupling agent,
1 to 3 parts by mass of a lubricant, and
0.6 to 1 part by mass of an antioxidant.

11. A method for preparing the composite resin-based semi-conductive shielding material of any one of claims 1 to 10, the method comprising:
mixing and kneading, and granulating the low-density polyethylene resin, the ethylene-acrylic acid resin, and the electrically conductive fillers to obtain a granulated material;
mixing the granulated material with the cross-linking agent to obtain a preform; and
heating the preform.

12. The method of claim 11, wherein the mixing and kneading the low-density polyethylene resin, the ethylene-acrylic acid resin, and the electrically conductive fillers comprise:
mixing and kneading the low-density polyethylene resin with the ethylene-acrylic acid resin, adding the electrically conductive fillers and continuing with the mixing and kneading.

13. The method of claim 11 or 12, wherein the mixing and kneading is performed at a rotation speed in a range from 80rpm to 150rpm and a temperature in a range from 150°C to 180°C.

14. The method of any one of claims 11 to 13, wherein the temperature of the heating is in a range from 50°C to 70°C.

15. A semi-conductive shielding product, prepared from raw materials comprising the composite resin-based semi-conductive shielding material of any one of claims 1 to 10, or a semi-conductive shielding material prepared by the method of any one of claims 11 to 14.
